# EUROPEAN PATENT APPLICATION

(11) **EP 2 660 703 A2**
(43) Date of publication of application: **06.11.2013**
(21) Application number: 13166126.6
(22) Date of filing: 01.05.2013
(51) Int. Cl.: G06F 3/0488, G06F 17/30, G06F 3/023

(54) **Method and apparatus for configuring keyboard for web browser**

(30) Priority: 02.05.2012 KR 20120046559
(71) Applicant: Samsung Electronics Co., Ltd, Gyeonggi-do 443-742 (KR)
(72) Inventor: Kim, Jin-Yup, 443-742 Gyeonggi-do (KR)
(74) Representative: Nederlandsch Octrooibureau

(57) **Abstract**

A method for configuring a keyboard for a web browser in a terminal includes analyzing a received application protocol response message; determining a key combination suitable for a selected input field based on the analysis results, if the input field for key input is selected by a user; and configuring a keyboard to include the determined key combination and displaying the configured keyboard. As a result, a keyboard suitable for an input field selected by a user may be automatically displayed, thereby preventing the user from switching the keyboard to access desired key buttons to be displayed.

## Description

### BACKGROUND OF THE INVENTION

### Field of the Invention

The present invention relates generally to a method and apparatus for configuring a keyboard, and more particularly, to a method and apparatus for configuring a keyboard used for web browsing.

### Description of the Related Art

In recent years, smart phone industry represents one of the fastest-growing sectors in all of technology.

In smartphones implemented with a touch screen, if an input field for search or login to a specific site is selected by a user, the terminal displays a keyboard, by which the user may enter keys to perform search and login functions.

However, in the conventional method used to display a keyboard, a terminal displays a keyboard that is set by default or displays its default web browser. Therefore, a user needs to inconveniently switch the keyboard in order to find his/her desired keyboards in another language or Koreanspecial character keys.

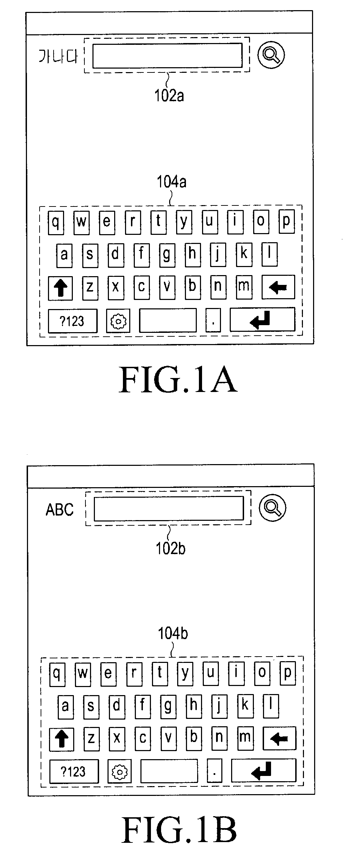

FIGs 1A to 1D show some of the drawbacks associated with the conventional art.

FIG. 1A illustrates an example in which a user selects an input field 102a to enter search terms in a Korean site, and FIG. 1B illustrates an example in which a user selects an input field 102b to enter search terms in an English-language site.

In FIG. 1A, it can be expected that the user will make a search by entering Korean characters when a Korean site is displayed, but the terminal displays an English alphabet keyboard 104a that is set by defaultor its default web browser regardless user's preference. Therefore, the user needs to inconveniently switch the keyboard to Korean keyboard.

In FIG. 1B, the terminal displays an English alphabet keyboard 104b in an English-language site during operation. However, as in FIG. 1A, the terminal merely displays a keyboard that is set by default or its default web browser without taking into account the source of the site.

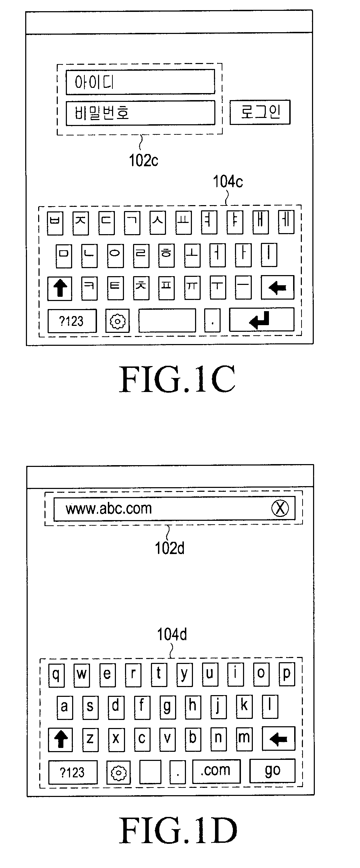

FIG. 1C illustrates an example in which a user selects an input field 102c in order to log in to a specific site in Korean language.

Generally, for an ID (or username) and a password for login displayed in Korean referring to a particular site, a combination of letters and numbers is used. However, in FIG. 1C, the terminal merely displays a Korean keyboard 104c without taking into account the characteristics of the ID and password for login. Therefore, the user needs to inconveniently switch the keyboard in order to enter English letters and numbers when only Korean key board is provided.

FIG. 1D illustrates an example in which a user selects an input field 102d in order to enter an address of a specific site. When entering an address of a specific site, the user needs to enter a domain address ending with '.com' or '.net'. To this end, the terminal provides a key for '.com' in the keyboard 104d, for user's convenience but fails to provide other keys showing a shortcut acronym.

Accordingly, in the conventional method, the terminal displays a keyboard that is set by default only or its default web browser without addressing other needs which in turn requires the user to further manipulate the keyboard change.

### SUMMARY OF THE INVENTION

An aspect of the present invention is to address at least the above-mentioned problems and/or disadvantages and to provide at least the advantages described below. Accordingly, an aspect of the present invention provides a method and apparatus for configuring a keyboard suitable for an input field selected by a user, by analyzing an application protocol response message and extracting components related to a key combination required for the input field.

In accordance with one aspect of the present invention, a method for configuring a keyboard for a web browser in a terminal includes: analyzing a received application protocol response message; determining a key combination suitable for a selected input field based on the analysis results when the input field for key input is selected by a user; and configuring the keyboard supporting the determined key combination for display.

In accordance with another aspect of the present invention, an apparatus for configuring a keyboard for a web browser in a terminal includes: a controller for analyzing a received application protocol response message, determining a key combination suitable for a selected input field based on the analysis results when the input field for key input is selected by a user, and configuring the keyboard supporting the determined key combination; and a display for displaying the configured keyboard.

In accordance with further another aspect of the present invention, a processor-readable medium storing one or more programs for implementing a method of configuring a keyboard for a web browser includes: analyzing a received application protocol response message; determining a key combination suitable for a selected input field based on the analysis results when the input field for key input is selected; and configuring the keyboard supporting the determined key combination and displaying the configured keyboard.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIGs. 1A to 1D illustrate a method for displaying a keyboard according to the known art;
FIG. 2 is a flowchart illustrating a process of configuring a keyboard according to an embodiment of the present invention;
FIGs. 3A, 3B, 4A, 4B, 5, 6A and 6B illustrate a process of selecting a key combination according to an embodiment of the present invention; and
FIG. 7 is a block diagram illustrating an apparatus for configuring a keyboard according to an embodiment of the present invention.

Throughout the drawings, the same drawing reference numerals will be understood to refer to the same elements, features and structures.

### DETAILED DESCRIPTION

Preferred embodiments of the present invention will now be described in detail with reference to the accompanying drawings. In the following description, specific details such as detailed configuration and components are merely provided to assist the overall understanding of exemplary embodiments of the present invention. Therefore, it should be apparent to those skilled in the art that various changes and modifications of the embodiments described herein can be made without departing from the scope and spirit of the invention. In addition, descriptions of well-known functions and constructions are omitted for clarity and conciseness.

As described earlier, the conventional keyboard display method displays a keyboard set by default or its default web browser, thus failing to display the key buttons required for an input field selected or desired by a user during operation. To this end, the teachings of the present invention provides a method and apparatus for determining a key combination suitable for an input field selected by a user, thus configuring a keyboard having the determined key combination, and displaying the configured keyboard.

In the following description of exemplary embodiments of the present invention, it will be assumed that a terminal is equipped with a web browsing-enabled web browser, and adopts a touch screen on which a keyboard can be displayed and by which a user can enter keys using the displayed keyboard.

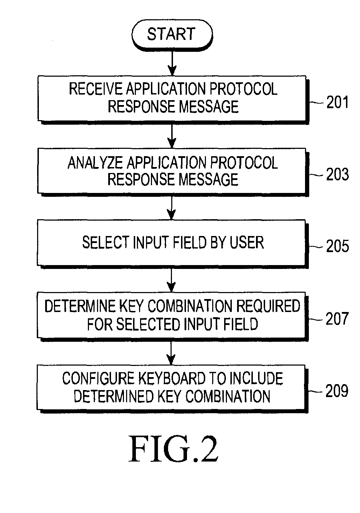

FIG. 2 is a flowchart illustrating a method for configuring a keyboard according to an embodiment of the present invention.

As shown, in step 201, the terminal receives an application protocol response message in response to an application protocol request message. The term 'application protocol' refers to an application protocol for establishing data communication, for example, a Transmission Control Protocol (TCP) or a User Datagram Protocol (UDP), and may include, for example, Post Office Protocol version 3 (POP3), Simple Mail Transfer Protocol (SMTP), Internet Message Access Protocol (IMAP), Hyper Text Transfer Protocol (HTTP) and File Transfer Protocol (FTP). Any of these protocols or other known protocols to artisans can be used as a request-response protocol in the client-server model where the client submits a request message to the server, and the server provides resources and other content via a response message to the client. Hence, the response contains completion status information about the request and may also contain requested content in its message body. Thus, in step 201, a terminal user may requests a connection to a particular content server, and in return, the server transmits the requested content to the terminal.

It should be noted that a person of ordinary skill in the art will appreciate that the content server would typically contain one or more transceivers, or be in communication with one or more transceivers, for receiving broadcast, satellite, wired cable, WPAN/WLAN and Internet, just to name a few possible sources, and for communicating with the mobile devices.

In step 203, the terminal analyzes the received application protocol response message. Specifically, the terminal identifies an input field included in the received application protocol response message by parsing the application protocol response message, and extracts components related to a key combination required for the input field.

The term 'input field' as used herein may refer to a field in which a user may enter an address of a specific site, search terms, and/or information for login. The terminal may identify an input field by analyzing components included in the received application protocol response message. For example, if a body part of the received application protocol response message is in a Hyper Text Markup Language (HTML) format, the terminal may identify an input field by determining a location of an 'input' tag, which is a component defining an input field in the body part of the HTML format. The component defining an input field includes an 'input' tag, and properties such as type, value, name, class, title and id, which are properties of the 'input' tag.

The term 'key combination-related components' as used herein may refer to components for determining a key combination required for an input field, which is selected when the user selects or enters an input field, and the components may be located in any one or both of a header part and a body part of the application protocol response message. For example, if the received application protocol response message is an HTTP response message and its body part is in an HTML format, the key combination-related components include an acceptable language set located in an HTTP header part, a 'lang' property located in an HTML header part, properties such as type, value and name, which are properties of an 'input' tag located in an HTML body part, and their property values. These key combination-related components may be set differently depending on the settings.

The term 'key combination' as used herein may refer to a combination of keys determined to be required for supporting an input field selected by the user, and the key combination includes one or more keys.

After the analysis of the received application protocol response message is completed, if an input field is selected by the user in step 205, the terminal proceeds to step 207.

In step 207, the terminal determines a key combination required for the input field selected by the user. Specifically, the terminal determines which key buttons are required in the input field during a subsequent key input by the user, based on the key combination-related components determined in step 203, and determines a suitable key combination for display.

In step 209, the terminal configures a keyboard to include the determined key combination and displays the configured keyboard as a new keyboard. Alternatively, configuring a keyboard to include the determined key combination may refer to configuring a new keyboard so that the determined key combination may be further included except for some keys which are not determined to be required in the set keyboard. Alternatively, configuring a keyboard to include the determined key combination may refer to switching the language of the set keyboard to another language.

In accordance with an embodiment of the present invention, which has been described with reference to FIG. 2, if an input field is selected by the user, the terminal displays a keyboard including keys required for the selected input field, thereby preventing the user from switching the keyboard later to enter the desired keys.

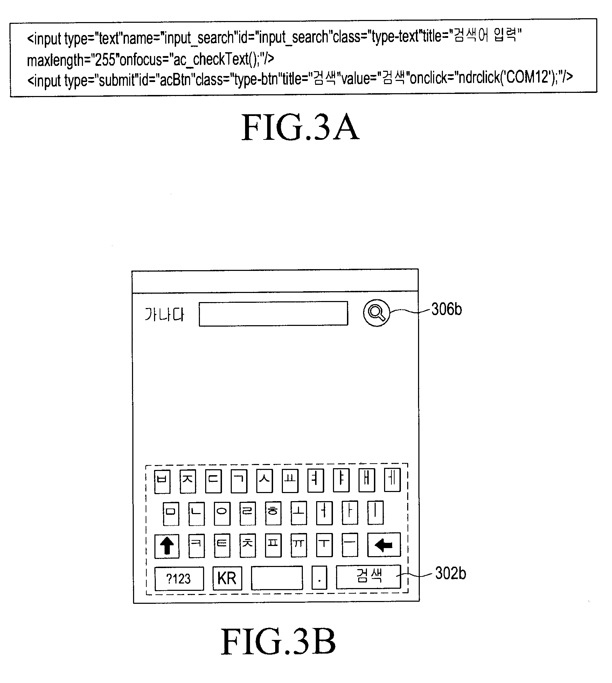

FIGs. 3A and 3B illustrate a process of selecting a key combination according to an embodiment of the present invention.
FIG. 3A illustrates an example in which a terminal extracts components corresponding to an input field by parsing and analyzing an application protocol response message whose body part is in an HTML format.

As described above, in HTML, an 'input' tag is a component defining an input field. Therefore, by parsing and analyzing the application protocol response message, the terminal may determine that a part defined by an 'input' tag corresponds to an input field.

After the input field is determined, the terminal determines whether there are key combination-related components among the components defining the input field. For example, the key combination-related components may include properties such as type, value and name, which are properties of the 'input' tag, and their property values.

In FIG. 3A, since a property value of a 'type' property of the first 'input' tag is 'text', the terminal may determine that a text (including special characters) may be entered in the first input field. In addition, since a property value of a 'type' property of the second 'input' tag is 'submit', the terminal may determine that a key button for transmission of the text entered in the first input field may be selected. Further, since a property value of a 'value' property of the second 'input' tag is 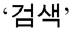 ('search' in Korean), the terminal may determine that a key button selected for transmission of the entered text is a key button for a search function.

Therefore, the terminal may include a key button 302b related to the search function in the key combination. In addition, since the property value 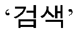 of the 'value' property of the second 'input' tag is a form of Korean characters, the terminal may determine so that Korean consonants and vowels may be included in a key combination required for the first input field, configure a keyboard to include the determined key combination, and display the configured keyboard. A screen, on which the configured keyboard is displayed, is illustrated in FIG. 3B.

The terminal may display the key button 302b for a search function in the form of text or image. When displaying the key button 302b in the form of text, the terminal may display the keyboard in Korean characters since the property value of the 'value' property of the second 'input' tag is in the form of Korean characters.

Compared with the known art which has been described with reference to FIG. 1A, the embodiment of the present invention has the following advantages:
The user does not need to switch the keyboard in order to enter Korean characters from English keyboard. In addition, since the key button 302b for the search function is displayed in Korean next to Korean character buttons, the user does not need to inconveniently move upward his/her finger in order to touch a search button 306b displayed on the top of the screen.

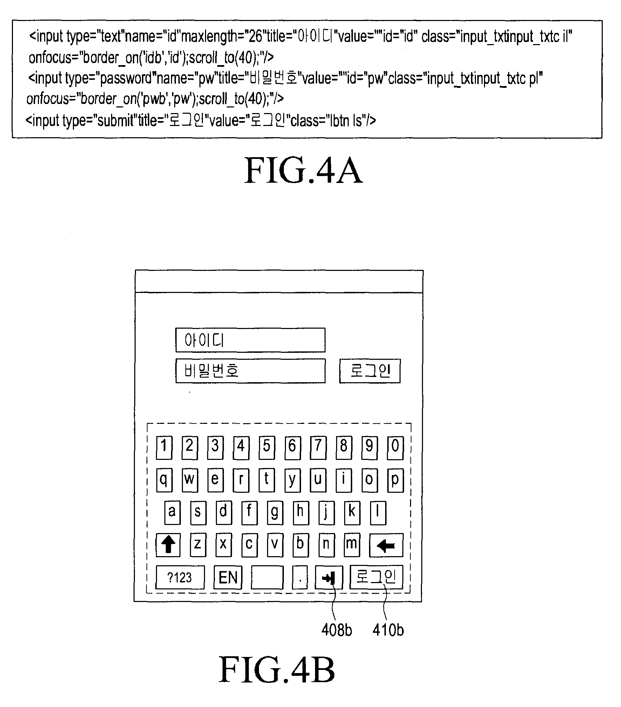

FIGs. 4A and 4B illustrate a process of selecting a key combination according to an embodiment of the present invention.

FIG. 4A, like FIG. 3A, illustrates an example in which a terminal extracts components corresponding to an input field by parsing and analyzing an application protocol response message whose body part is in an HTML format.

In FIG. 4A, since there are three consecutive 'input' tags, and property values of 'type' properties of the first and second 'input' tags are 'text' and 'password', respectively, the terminal may determine that a text may be entered in the first and second input fields. Therefore, the terminal may include a tab key 408b for switching between input fields in the key combination. In alternative embodiment, if a predetermined number of, for example, three or more 'input' tags are located consecutively depending on the settings, the terminal may include the tab key 408b for switching between input fields in the key combination.

Since a property value of a 'name' property of the first 'input' tag is 'id', the terminal may determine that an ID may be entered in the first input field, and since a property value of a 'type' property of the second 'input' tag is 'password', the terminal may determine that a password may be entered in the second input field. In addition, since it is general that an ID and a password consist of a combination of English letters and numbers, the terminal may include English alphabets and numbers in the key combination. In some cases, an ID may be an E-mail address, and for this case, the terminal may further include a special character '@' in the key combination.

Moreover, since a property value of a 'type' property of the third 'input' tag is 'submit', the terminal may determine that a key button for transmission of the texts entered in the first and second input fields may be selected, and since a property value of a 'value' property of the third 'input' tag is 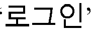 ('login' in Korean), the terminal may determine that the key button to be selected for transmission of the input texts may be a key button related to login.

Therefore, the terminal may determine a required key combination of English alphabet keys, numeric keys, a tab key and a 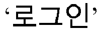 key 410b, configure a keyboard to include the determined key combination, and display the configured keyboard, which is illustrated in FIG. 4B.

In alternative embodiment, if there are no components for determining a key combination in the 'input' tag(s) or based on the settings, the terminal may determine a key combination required for an input field(s) using a tag of a header (i.e., an HTML header part) of a content part of an application protocol response message.

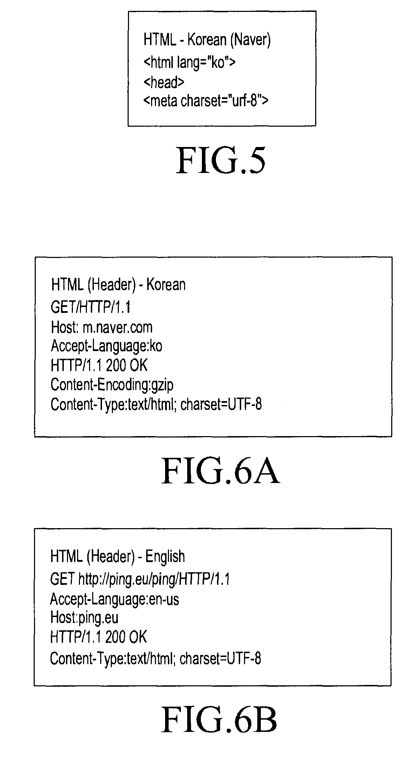

For example, if a body part of an application protocol response message is in an HTML format, and a 'lang' tag, which is a component defining the language, is included in a header part of HTML as illustrated in FIG. 5, the terminal may determine a key combination required in the input field to include Korean consonant and vowel keys, depending on the property value 'ko' of the 'lang' tag.

In yet another embodiment, if there are no components for a key combination even in the header of the content part of the application protocol response message, the terminal may determine a key combination required in the input field based on the acceptable language set located in a header part (for example, an HTTP header part) of the application protocol response message, depending on the settings for improvement of process of the terminal.

For example, if the header part of the application protocol response message is in an HTTP format, and the application protocol response message includes an acceptable language set 'Accept-Language' specifying the language set acceptable in a transmitter that sent an HTTP application protocol request message, then the terminal may determine a key combination required in the input field to include Korean consonant and vowel keys, depending on the language 'ko' specified by the acceptable language set, as illustrated in FIG. 6A, or may determine a key combination required in the input field to include English alphabet keys, depending on the language 'en-us' specified by the acceptable language set, as illustrated in FIG. 6B.

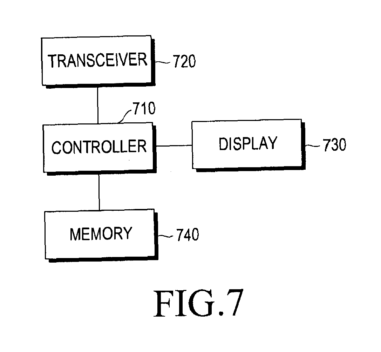

FIG. 7 is a block diagram illustrating an apparatus for configuring a keyboard according to an embodiment of the present invention.

Referring to FIG. 7, the apparatus for configuring a keyboard includes a controller 710, a transceiver 720, a display 730 and a memory 740.

The controller 710 sends an application protocol request message and then receives an application protocol response message thereto, by means of the transceiver 720. The controller 710 analyzes the received application protocol response message. Specifically, the controller 710 identifies an input field(s) by parsing the received application protocol response message, and extracts components related to a key combination required for the input field.

More specifically, the controller 710 determines a key combination suitable to the selected input field based on the analysis results of the application protocol response message. That is, the controller 710 determines if there are key combination-related components among the components defining the input field, and determines a key combination based on the property values of the components when there are key combination-related components among the components defining the selected input field. The controller 710 may determine the key combination to include keys expressed in a language corresponding to a property value of the components. The controller 710 may also determine the key combination to include keys corresponding to the property values of the components. For example, if a property value of a 'type' property and a property value of a 'value' property are 'submit' and 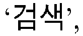 respectively, in an 'input' tag of HTML, the controller 710 may determine a key combination to include a 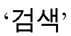 key. The controller 710 may also determine a key combination to include a set key(s) depending on the number of input fields adjacent to the selected input field.

If there are no key combination-related components among the components defining the selected input field, the controller 710 may determine whether there are key combination-related components among the components defining a body part of the received application protocol response message, and determine a key combination based on the property values of the components if there are key combination-related components among the components defining the body part of the application protocol response message. The components defining the body part of the application protocol response message includes, for example, a 'lang' tag of HTML.

Alternatively, if there are no key combination-related components among the components defining the body part of the received application protocol response message, the controller 710 may determine whether there are key combination-related components among the components defining a header part of the application protocol response message, and determine a key combination based on the property values of the components if there are key combination-related components among the components defining the header part of the application protocol response message. The components defining the header part of the application protocol response message includes an acceptable language set.

In addition, the controller 710 configures a keyboard to include the determined key combination and outputs the configured keyboard to the display 730.

The transceiver 720 transmits an application protocol request message delivered from the controller 710, to the outside, and delivers an application protocol response message received from the outside, to the controller 710.

The display 730 displays a screen depending on the signal received from the controller 710, generates a key input signal by the user, and delivers the generated key input signal to the controller 710.

The memory 740 stores at least one default configuration of a keyboard. For example, the memory 740 stores default configuration including English alphabets, set function keys and the like, and/or default configuration including Korean consonants and vowels, set function keys and the like. In addition, the memory 740 stores rules for determining a key combination depending on the results obtained by analyzing the application protocol response message. The rules include rules about, for example, whether to give priorities to the analysis results of the body part of the application protocol response message, or whether to give priorities to the analysis results of the header part of the application protocol response message. In addition, the rules include rules about the components based on which the controller 710 will determine a key combination, among the components of the application protocol response message. Further, the memory 740 stores the analysis results of the application protocol response message. The analysis results include information about, for example, the components included in an input field(s), the components included in a header of content (or body part) of the application protocol response message, and the components included in a header part of the application protocol response message. The information stored in the memory 740 is read and used by the controller 710 to analyze the application protocol response message, determine a key combination, and configure a keyboard.

It should be noted the exemplary embodiment is discussed using Korean language as an illustrative purpose, but it should be noted that the teachings of the present invention can be applied to include other language when a user operates in any bi-lingual mode.

The above-described embodiments of the present invention may be implemented in a variety of ways. For example, exemplary embodiments of the present invention may be implemented by hardware, software or a combination thereof. When implemented by software, these embodiments may be implemented as software that can be executed in one or more processors that use a variety of Operating Systems (OSs) or platforms. In addition, such software may be created using any one of a plurality of appropriate program languages, and may be complied into machine codes or intermediate codes which are executed in framework or virtual machine.

In addition, if embodiments of the present invention are executed in one or more processors, they may be implemented by processor-readable media (for example, memories, floppy disks, hard disks, compact disks, optical disks, magnetic tapes or the like) storing one or more programs for performing the method for implementing the above-described various embodiments of the present invention.

As is apparent from the foregoing description, the terminal proposed by the present invention displays a keyboard suitable for the input field selected by the user, thereby preventing the user from annoyingly switching the keyboard to enter keys.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for configuring a keyboard for a web browser in a terminal, comprising:
analyzing a received application protocol response message;
determining a key combination suitable for a selected input field based on the analysis results when the input field for key input is selected by a user; and
configuring the keyboard supporting the determined key combination for display.

2. The method of claim 1, wherein the analyzing comprises identifying the input field by parsing the application protocol response message and extracting components related to the key combination required for the input field.

3. The method of claim 2, wherein the determining the key combination comprises:
determining whether there are key combination-related components among the components defining the selected input field; and
determining the key combination based on property values of the key combination-related components when there are key combination-related components among the components defining the selected input field.

4. The method of claim 3, wherein the determining the key combination comprises determining the key combination to include keys expressed in a language corresponding to the property values of the key combination-related components.

5. The method of claim 3, wherein the determining the key combination comprises determining the key combination to include key buttons corresponding to the property values of the key combination-related components.

6. The method of claim 3, wherein the determining the key combination comprises determining the key combination to include keys which are set depending on the number of input fields adjacent to the selected input field.

7. The method of claim 3, wherein the determining the key combination comprises:
determining whether there are key combination-related components among components defining a body part of the application protocol response message when there are no key combination-related components among the components defining the selected input field; and
determining the key combination based on property values of the key combination-related components when there are key combination-related components among the components defining the body part of the application protocol response message.

8. The method of claim 7, wherein the determining the key combination comprises:
determining whether there are key combination-related components among components defining a header part of the application protocol response message when there are no key combination-related components among the components defining the body part; and
determining the key combination based on values specified by the components when there are key combination-related components among the components defining the header part of the application protocol response message.

9. A terminal for configuring a keyboard for a web browser, comprising:
a controller for analyzing a received application protocol response message, determining a key combination suitable for a selected input field based on the analysis results when the input field for key input is selected by a user, and configuring the keyboard supporting the determined key combination; and
a display for displaying the configured keyboard.

10. The terminal of claim9, wherein the controller identifies the input field by parsing the application protocol response message, and extracts components related to the key combination required for the input field.

11. The terminal of claim 10, wherein the controller determines whether there are key combination-related components among the components defining the input field, and determining the key combination based on property values of the combination-related components when there are key combination-related components among the components defining the selected input field.

12. The terminal of claim 11, wherein the controller determines the key combination to include keys expressed in a language corresponding to the property values of the key combination-related components.

13. The terminal of claim 11, wherein the controller determines the key combination to include key buttons corresponding to the property values of the key combination-related components.

14. The terminal of claim 11, wherein the controller determines the key combination to include keys which are set depending on the number of input fields adjacent to the selected input field.

15. The terminal of claim 11, wherein the controller determines whether there are key combination-related components among the components defining a body part of the application protocol response message when there are no key combination-related components among the components defining the selected input field, and determines the key combination based on property values of the key combination-related components when there are key combination-related components among the components defining a body part of the application protocol response message.

16. The terminal of claim 15, wherein the controller determines whether there are key combination-related components among components defining a header part of the application protocol response message when there are no key combination-related components among the components defining the body part, and determines the key combination based on values specified by the components, when there are key combination-related components among the components defining a header part of the application protocol response message.
